# EUROPEAN PATENT APPLICATION

(11) **EP 2 090 464 A1**
(43) Date of publication of application: **19.08.2009**
(21) Application number: 09152128.6
(22) Date of filing: 05.02.2009
(51) Int. Cl.: B60P 7/06, B60P 3/40

(54) **Method of transporting bulky equipment of a wind power plant, preassembled equipment**

(30) Priority: 15.02.2008 US 31822
(71) Applicant: General Electric Company, Schenectady, NY 12345 (US)
(72) Inventor: Meiners, Karl-Heinz, 48485, Neuenkirchen (DE)
(74) Representative: Bedford, Grant Richard

(57) **Abstract**

The disclosure relates to preassembled equipment (2) and a method of transporting bulky equipment (2) of a wind power plant (1) from a preassembly site to an installation site, the equipment (2) comprising at least two modules (3, 4), the method comprising the steps of preassembling the modules (3, 4) onto a support (6), wherein the modules (3, 4) are placed at a first distance (D1) from another, transporting the support (6) with the modules (3, 4) from the preassembly site to the installation site, and at the installation site, displacing the modules (3, 4) and fixing them at the support (6) at a second distance (D2) being greater than the first distance (D1). While the equipment (2) provides for sufficient space, e.g. for maintenance aisles, in its unpacked form, by transporting it in a preassembled and packed form, transportation and installation are considerably simplified.

## Description

The present disclosure relates generally to wind turbines and wind power plants. Particularly the disclosure relates to a method of transporting bulky equipment of a wind power plant from a preassembly site to an installation site. Further the disclosure relates specifically to a preassembled equipment of a wind power plant as well as assembled equipment in a wind power plant.

Wind turbines increase in rated power and in size. Thereby manufacturing the various components of a wind power plant and installing them at an installation site puts high demands on safe, efficient and economical transportation. Standard wind power plants are capable of producing more than 200 kilowatts such as 500 kilowatts, 1 megawatt or more. This leads to corresponding large sizes of various components including mechanical or electrical subsystems. Usually these subsystems are manufactured at a manufacturing site and, due to their large size, are carried individually to the installation site. At the installation site they are assembled and form the wind power plant. Due to a large size, some of the subsystems do not fit into conventional containers and thus need to be even further subdivided and transported in subdivided parts separately. In order to avoid further subdividing, specially designed containers could be used which are capable of receiving the large subsystems, however, this makes transport more difficult and more expensive as these specifically designed containers do not correspond to the norm and logistics are thus made more difficult.

In view of the above, according to one embodiment of the present invention, a method of transporting bulky equipment of a wind power plant from a preassembly site to an installation site, the equipment comprising at least two modules, comprises the steps of preassembling the modules onto a support, wherein the modules are placed at a first distance from another, transporting the support with the modules from the preassembly site to the installation site, and at the installation site, displacing the modules and fixing them at the support at a second distance being greater than the first distance.

In another embodiment, in view of the above, a preassembled equipment of a wind power plant comprises at least two modules, first fixings, and a support, wherein the modules are fixed to the support at a first distance with the first fixings for transport, and further comprises second fixings for fixing the modules at a second distance at an installation site of the wind power plant, wherein the second distance is greater than the first distance.

In yet a further embodiment, an equipment in a wind power plant comprises at least two modules, second fixings, and a support, wherein the modules are fixed to the support at a second distance by the first fixings, and further comprises first fixings for fixing the modules to the support at a first distance during transport of the equipment, wherein the first distance is smaller than the second distance.

Various advantages, embodiments and aspects that can be applied alone or in any suitable combination will be described in view of the drawings which are not meant to limit the scope of the embodiments but serve for illustrating them exemplarily. In the drawings:
- Fig. 1: shows a schematic drawing illustrating a wind power plant from a side view that was transported with a method of transporting bulky equipment according to one embodiment;
- Fig. 2A and 2B: show bulky equipments of a wind power plant during transport (Fig. 2A) and after installation (Fig. 2B) in cross section;
- Fig. 3A and 3B: show bulky equipment of a wind power plant according to another embodiment during transport (Fig. 3A) and after installation (Fig. 3B); and
- Fig. 4A and 4B: show yet another embodiment with bulky equipment during transport (Fig. 4A) and after installation (Fig. 4B).

Further embodiments, aspects and advantages which can be applied individually or in any suitable combination are apparent from the dependent claims, the description and the accompanying drawings.

According to an embodiment bulky equipment of a wind power plant is manufactured as modules which are preassembled onto a support at a first distance from another. The first distance is chosen to be such that the modules with their bottom face area during transport fit into the inner bottom face area of a conventional container. This simplifies transport of the modules greatly because, conventionally, the costs for transporting a bulky good is correlated to the number of standardized bottom face areas of conventional containers that the transported bulky good requires for transport. For example, on a ship if the width of a good is somewhat larger than a the width of a standard container on the ship, two container spaces need to be reserved for transporting that good. Thus transporting costs are increased by a factor of 2 even though just a few more percent of space would have been sufficient.

The size of the equipment is defined to be the size of a minimum rectangular box into which the equipment fits. Correspondingly, the size of a module is defined to be the size of a minimum rectangular box into which the module fits. The box has a vertical height, a length and a width, with the length being longer than the width.

The width and/or the height of the bulky equipment of the wind power plant in the meaning of this application is meant to be larger than 1.5 meters, for example larger than 2 meters, such as larger than 2.2 meters.

The width and/or the height of the modules are larger than 0.7 meter, for example larger than 1 meter, such as larger than 1.2 meters.

Some modules require to be installed separated at a certain distance in order to allow for sufficient cooling and/or to provide a maintenance or operation aisle for the maintenance or operation personnel. In some countries, certain minimum distances between given modules of a wind power plant are required by national regulations.

The first distance is the distance with which the modules are assembled to the support and are transported. The second distance is the distance with which the modules are fixed to the support at the installation site for operation. If the second distance leads to a size of the equipment that exceeds a standard container size, by making the modules placeable at a first and a second distance, transportation can be greatly facilitated when the first distance leads to a size of the equipment that is within a standard container size.

The first distance may be less than 1 meter, for example less than 0.6 meters, such as less than 0.3 meters.

The second distance may be more than 0.5 meters, for example more than 0.7 meters, such as more than 0.9 meters.

The width of a conventional container respectively the opening thereof is 2.3 meters. The height of a conventional container respectively the opening thereof is 2.3 meters. The length of a conventional container respectively the opening thereof is variable and may be more than 6 meters and up to 12 meters.

At the installation site the modules are displaced and fixed at the support at the second distance which is greater than the first distance.

In an embodiment, the second distance is such that the modules as fixed to the support at the second distance would not fit into the width of a conventional container.

According to the embodiments, the bulky equipment including the modules and the support is transported in a packed form. This packed form may or may not lead to a reduced volume in total. Usually it is not the volume that is critical but rather one or two of the three dimensions such as the width or the height, because the length of the standard containers can be rather large (up to 12 meters).

At the installation site, the equipment is unpacked. This unpacking may or may not lead to an increased volume of the bulky equipment in total. At the installation site, the equipment in its entirety is easily placed at the correct location and the modules are easily displaced and fixed suitably.

In the embodiments, in particular large spacing between the modules as required by national regulations, such as spacing for maintenance or operation aisles for technical personnel do not come at the expense of excessive transportation costs. In effect the bulky equipment, even though being too large to be transported with conventional containers, can be transported in conventional containers and be easily installed at the installation site. Further, a modular design freedom is increased and product reliability is enhanced.

In an embodiment, the modules are displaced by translation.

The modules may be displaced along the support using rails or guiding structures. In principle ball or cylinder bearings may be used for displacing the modules but as the displacement usually takes place only once, the modules may be shifted along smooth gliding surfaces along the support. For instance the contact surface of the modules are provided with spray zinc galvanizing and the contacting counterpart at the support is covered by deep zinc galvanizing. In this way excessive abrasive friction is reduced and the modules are easily displaced from their transport position to their installation position.

In another embodiment the modules are displaced by rotating or pivoting. The rotation or the pivoting may be about a pivot on the support. By rotating or pivoting the modules, the first distance for transport is increased and the modules are fixed at the support at the second distance.

In a further embodiment, the modules are displaced in a horizontal plane. The horizontal plane is defined with regard to the equipment as being installed.

Alternatively or in addition the modules may be displaced in a vertical plane. The vertical plane is defined with regard to the equipment as being installed.

In an embodiment, the first distance is smaller than 90 % of the second distance, in particular smaller than 80 %, for instance smaller than 70 % of the second distance.

In an embodiment, the preassembled equipment of a wind power plant comprises at least two modules, first fixings, and a support, wherein the modules are fixed to the support at a first distance with the first fixings for transport, and further comprising second fixings for fixing the modules at a second distance at an installation site of the wind power plant, wherein the second distance is greater than the first distance.

In yet a further embodiment, an equipment in a wind power plant comprises at least two modules, second fixings, and a support, wherein the modules are fixed to the support at a second distance by the second fixings, and further comprising fixing means for fixing the modules to the support at a first distance during transport of the equipment, wherein the first distance is smaller than the second distance.

In an embodiment, the respective sizes and the first distance add up to a total length that fits into a width or a height of a conventional container. The respective sizes of the modules and the second distance add up to a total length that is greater than the width or a height of the conventional container.

The support, the first fixings and the second fixings allow the bulky equipment to be transportable. The support and the fixings are designed to be mechanically sufficiently stable for transport (first fixings) and for operation of the wind power plant (second fixings) in a correspondingly suitable way.

The first distance, in an embodiment, is smaller than 90 % of the second distance, in particular is smaller than 80 %, for instance smaller than 70 %, of the second distance.

In another embodiment at least one of the modules is displaceable from the first fixing to the second fixing.

Advantageously rails or guidance lines are used for displacing the modules from their transport positions, where they are fixed with the first fixings, to their installation positions, where they are fixed with the second fixings.

Alternatively or in addition surfaces are provided at the modules and the support for sliding the modules during displacement. The contacting surfaces may be zinc galvanized, wherein the one contacting surface may be spray zinc galvanized and the other may be deep zinc galvanized.

In a yet another embodiment the equipment further comprises a rail for translational displacing the at least one module.

In a further embodiment, in addition or alternatively to the rail or the guiding line, the equipment comprises a pivot for rotationally displacing the at least one module.

The support may be a console.

In another embodiment the at least two modules are interlinked with flexible circuitry. In this way the bulky equipment can be assembled at a high degree of completeness already at the assembly site including the wiring and the circuitry between the modules and thus is easily installed at the installation site. This reduces the time at the installation site necessary for highly skilled personal for supervising the installation of the equipment.

In another embodiment the block-shaped space of the equipment being fixed by the first fixings is smaller than 90 %, in particular smaller than 80 %, for example smaller than 60 %, of the block-shaped space of the equipment being fixed by the second fixings. In this regard the volume to be transported may also be significantly reduced in comparison to the volume of the bulky equipment in its installed form.

In an embodiment, the block-shaped space of the equipment being fixed by the first fixing is greater than 10 square meters, in particular greater than 20 square meters, for instance greater than 30 square meters.

In yet another embodiment the equipment comprises electrical devices.

In particular, a module comprises at least one of: a rectifier for rectifying the electrical power generated by the wind power plant and a transformer.

In yet a further embodiment, a module comprises a DC-AC converter for converting the output of the rectifier and a central control of the wind power plant.

In yet another embodiment the equipment comprises mechanical devices.

In a particular embodiment, a module includes a mechanical component of the wind power plant such as one or more parts of or the entire wind turbine drive train, the generator, a gear box or a central rotating shaft of the wind power plant.

In another embodiment a module comprises at least one of a generator, a gear box, a rotor shaft and/or a hub.

The equipment may comprise electric and mechanical modules which may be placed at the first distance and the second distance.

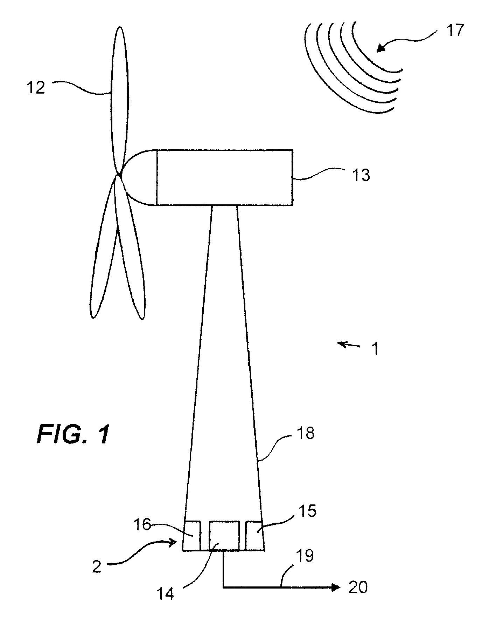

Fig. 1 schematically shows a wind power plant 1 with rotor blades 12 that drive a generator 13 which is placed within a nacelle on top of a tower 18. In the base of the tower 18 equipment 2 such as a transformer 14, a frequency converter 15 and a central control 16 is placed. Wind 17 drives the rotor blades 12. The electric power as generated by the generator 13 is processed and transformed by transformer 15 and fed by power line 19 to the external grid 20.

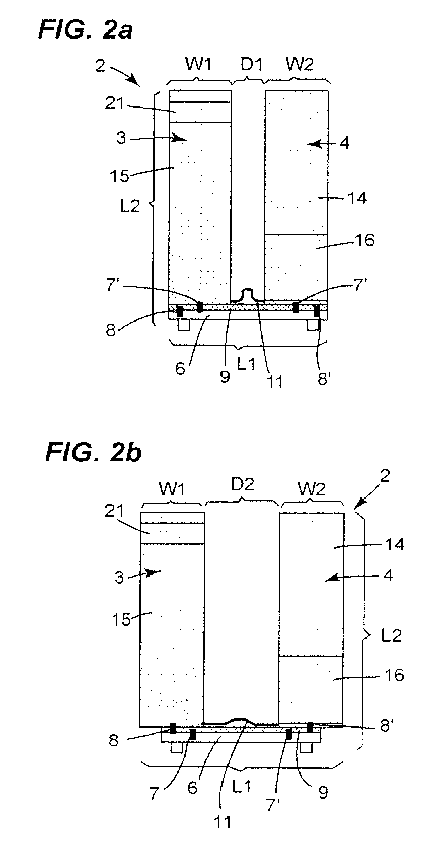

Fig. 2A and Fig. 2B schematically show bulky equipment 2 of the wind power plant 1 in cross section during transport (Fig. 2A) and after installation at the installation site (Fig. 2B). The equipment 2 comprises a first module 3 and a second module 4 which are fixed to a support 6 by first fixings 7, 7'. The first module 3 comprises a frequency converter 15 for converting the electric power as generated by the electric generator 13 and an auxiliary control 21. The second module 4 comprises a transformer 14 for transforming the voltage as internally being used by the wind power plant 1 to the external voltage as required by the external grid 20. The second module 4 further comprises a central control 16. The first 3 and the second 4 modules are separated by a first distance D1 for transport. The first module 3 has a width W1 and the second module 4 has a second width W2. The first W1, and second W2 width and the first distance D1 add up to a total first length L1. The first length L 1 is such that the equipment 2 fits into the width of a conventional container which is 2.3 meters. The equipment 2 has a height of first length L1 which preferably is smaller than 2.3 meters in order for the equipment to fit into the standard height of a conventional container. The first 3 and second 4 modules are preassembled and interconnected by flexible circuitry 11.

During installation the first 3 and second 4 modules are separated and the distance between the two is increased. The first 3 and second 4 modules are fixed to the support 6 at a second distance D2 which is a minimum distance for a maintenance aisle for maintenance personnel as required for operating the wind power plant by national regulations. This leads to an increased first length L1 being the sum of the first width W1, the second width W2 and the second distance D2. The first length L1 after displacing the two modules 3, 4 is greater than the width of a conventional container which is 2.3 meters. The two modules 3, 4 are displaced in a horizontal plane on the support 6 by means of a rail 9 which may be a guiding structure for facilitating the displacement. Once the modules 3, 4 are displaced they are fixed to the support 6 by means of second fixings 8, 8'. Due to the flexibility of the flexible circuitry 11 no further adding of wiring are necessary. Thus the equipment 2 may be preassembled and tested to a high degree of completeness at a preassembly site and may be easily installed at an installation site with a reduced need for highly trained personal being required to be present during installation. Due to the possibility of transporting the equipment 2 in a comparatively compact way, the equipment does not require more width during transport than a conventional container and thus transportation costs are greatly reduced.

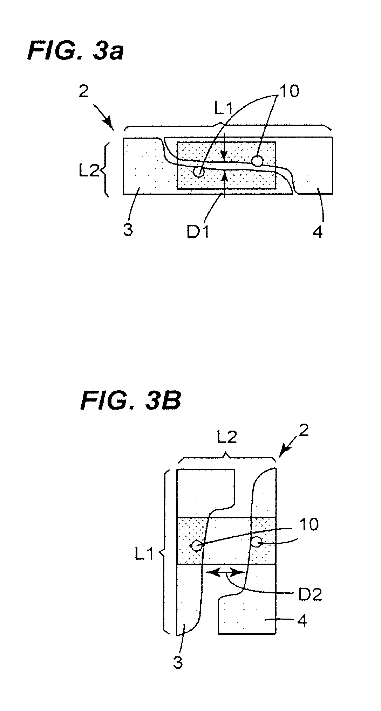

Fig. 3A and Fig. 3B schematically show another embodiment where the equipment 2 is packed and expanded by pivoting of the modules 3, 4 about pivots 10. During transport the modules 3, 4 are placed at a small first distance D1. In consequence the second length L1 of a block shaped box into which the equipment 2 fits is comparatively small. The longer side of a block sized box having the first length L 1 is usually not a problem for conventional containers, as they are sufficiently long. By pivoting the modules 3, 4 about the pivots 10, the smaller of the two lengths L 1 and L2 increases as the second distance D2 of the two modules 3, 4 is greater than the first distance D1. Due to the pivot the equipment 2 is expanded and sufficient space between the modules 3, 4 is provided as required for air circulation and to provide an aisle for personal to operate the modules 3, 4.

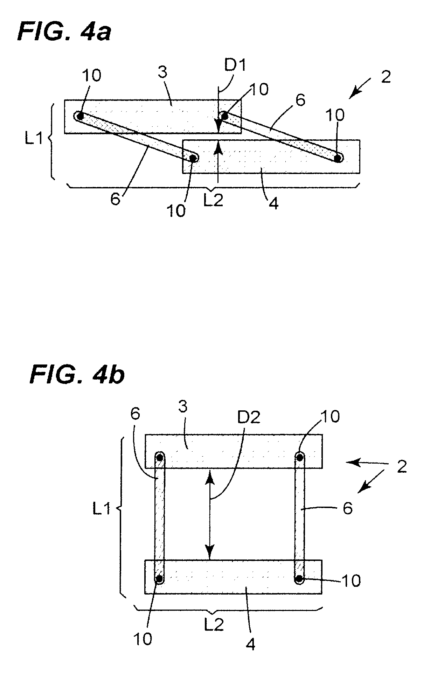

Fig. 4A and Fig. 4B show another embodiment where the equipment 2 is packed for transport (Fig. 4A) and unpacked, i.e. expanded, for installation (Fig. 4B). During unpacking the modules 3, 4 are further separated such that their respective separation distance is increased from the first distance D 1 to the second distance D2. In the same way the first length of a block shaped box into which the equipment 2 fits is increased and sufficient space is provided after unpacking for sufficient air circulation and enough space for personal to operate the modules 3, 4.

An embodiment relates to preassembled equipment 2 and a method of transporting bulky equipment 2 of a wind power plant 1 from a preassembly site to an installation site, the equipment 2 comprising at least two modules 3, 4, the method comprising the steps of preassembling the modules 3, 4 onto a support 6, wherein the modules 3, 4 are placed at a first distance D1 from another, transporting the support 6 with the modules 3, 4 from the preassembly site to the installation site, and at the installation site, displacing the modules 3, 4 and fixing them at the support 6 at a second distance D2 being greater than the first distance D1. While the equipment 2 provides for sufficient space, e.g. for maintenance aisles, in its unpacked form, by transporting it in a preassembled and packed form, transportation and installation are considerably simplified.

This written description uses examples, including the preferred mode, to enable any person skilled in the art to make and use the described subject-matter. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are now defined by the following numbered clauses:
1. Method of transporting bulky equipment of a wind power plant from a preassembly site to an installation site, the equipment comprising at least two modules, the method comprising
   preassembling the modules onto a support, wherein the modules are placed at first distance from another,
   transporting the support with the modules from the preassembly site to the installation site, and
   at the installation site, displacing the modules and fixing them at the support at a second distance being greater than the first distance.
2. The method according to clause 1, wherein the modules are displaced by translation.
3. The method according to any preceding clause, wherein the modules are displaced by rotating or pivoting.
4. The method according to any preceding clause, wherein the modules are displaced in a horizontal plane.
5. The method according to any preceding clause, wherein the modules are displaced in a vertical plane.
6. The method according to any preceding clause, wherein the first distance is smaller than 90 % of the second distance, in particular is smaller than 80 %, for instance smaller than 70 %, of the second distance.
7. Preassembled equipment of a wind power plant comprising
   at least two modules,
   first fixings, and
   a support,
   wherein the modules are fixed to the support at a first distance with the first fixings for transport, and
   further comprising second fixings for fixing the modules at a second distance at an installation site of the wind power plant, wherein the second distance is greater than the first distance.
8. Equipment in a wind power plant comprising
   at least two modules,
   second fixings, and
   a support,
   wherein the modules are fixed to the support at a second distance by the second fixings, and
   further comprising first fixings for fixing the modules to the support at a first distance during transport of the equipment,
   wherein the first distance is smaller than the second distance.
9. Equipment of clause 7 or 8, wherein the first distance is smaller than 90 % of the second distance, in particular is smaller than 80 %, for instance smaller than 70 %, of the second distance.
10. Equipment of any of clauses 7 to 9, wherein at least one of the modules is displaceable from the first fixing to the second fixing.
11. Equipment according to any of clauses 7 to 10, further comprising a rail for translationally displacing the at least one module.
12. Equipment according to any of clauses 7 to 11, further comprising a pivot for rotationally displacing the at least one module.
13. Equipment according to any of clauses 7 to 12, wherein the support is a console.
14. Equipment according to any of clauses 7 to 13, wherein the at least two modules are interlinked with flexible circuitry.
15. Equipment according to any of clauses 7 to 14, wherein the block-shaped space of the equipment being fixed by the first fixings is smaller than 90 %, in particular smaller than 80%, for example smaller than 60 %, of the block-shaped space of the equipment being fixed by the second fixings.
16. Equipment according to any of clauses 7 to 15, wherein the block-shaped space of the equipment being fixed by the first fixing is greater than 10 m³, in particular greater than 20 m², e.g. greater than 30 m².
17. Equipment according to any of clauses 7 to 16, wherein a module comprises at least one of a rectifier for rectifying the electrical power generated by the wind power plant and a transformer.
18. Equipment according to any of clauses 7 to 17, wherein a module comprises a DC-AC converter for converting the output of the rectifier and a central control of the wind power plant.
19. Equipment according to any of clauses 7 to 18, wherein a module comprises at least one of
   a generator,
   a gear box,
   a rotor shaft.
20. Equipment according to any of clauses 7 to 19, wherein the equipment comprises electric and mechanical modules.

## Claims

1. A method of transporting bulky equipment (2) of a wind power plant (1) from a preassembly site to an installation site, the equipment (2) comprising at least two modules (3, 4), the method comprising the steps of
- preassembling the modules (3, 4) onto a support (6), wherein the modules (3, 4) are placed at a first distance (D1) from another,
- transporting the support (6) with the modules (3, 4) from the preassembly site to the installation site, and
- at the installation site, displacing the modules (3, 4) and fixing them at the support (6) at a second distance (D2) being greater than the first distance (D1).

2. The method according to claim 1, wherein the modules (3, 4) are displaced by translation.

3. The method according to claim 1 or 2, wherein the modules (3, 4) are displaced by rotating or pivoting.

4. The method according to any one of the preceding claims, wherein the modules (3, 4) are displaced in a horizontal plane.

5. The method according to any one of the preceding claims, wherein the modules (3, 4) are displaced in a vertical plane.

6. The method according to any one of the preceding claims, wherein the block-shaped space of the preassembled equipment (2) prior transporting is smaller than 90 %, in particular smaller than 60 %, of the block-shaped space of the equipment (2) after displacing.

7. Preassembled equipment (2) of a wind power plant (1) comprising
at least two bulky modules (3, 4),
first fixings (7, 7'), and
a support (6),
wherein the modules (3, 4) are fixed to the support (6) at a first distance (D1) with the first fixings (7, 7') for transport, and
further comprising second fixings (8, 8') for fixing the modules (3, 4) at a second distance (D2) at an installation site of the wind power plant (1), wherein the second distance (D2) is greater than the first distance (D1).

8. Equipment (2) in a wind power plant (1) comprising
at least two bulky modules (3, 4),
second fixings (8, 8'), and
a support (6),
wherein the modules (3, 4) are fixed to the support (6) at a second distance (D2) by the second fixings (8, 8'), and
further comprising first fixings (7, 7') for fixing the modules (3, 4) to the support (6) at a first distance (D1) during transport of the equipment (2),
wherein the first distance (D1) is smaller than the second distance (D2).

9. The equipment according to any one of the preceding claims 7 or 8, further comprising a rail (9) for translationally displacing the at least one module (3, 4).

10. The equipment according to any one of the preceding claims 7 to 9, further comprising a pivot (10) for rotationally displacing the at least one module (3, 4).
